# EUROPÄISCHE PATENTSCHRIFT

(11) **EP 2 329 950 B1**
(45) Veröffentlichungstag und Bekanntmachung des Hinweises auf die Patenterteilung: **07.09.2011**
(21) Anmeldenummer: 09015151.5
(22) Anmeldetag: 07.12.2009
(51) Int. Cl.: B32B 37/22, B32B 41/00, B32B 37/18

(54) **Verfahren zum Heißlaminieren von Blattgut sowie Laminierfolie, Laminierfoliensatz und Laminiergerät zur Durchführung des Verfahrens**
Method for hot laminating sheet-type products, laminating film, set of laminating films and laminating device for executing the method
Procédé de laminage à chaud de produits en feuilles, film de laminage, ensemble de films de laminage et appareil de laminage destiné à l'exécution du procédé

(43) Veröffentlichungstag der Anmeldung: 08.06.2011
(73) Patentinhaber: Monolith GmbH Bürosysteme, 45127 Essen (DE)
(72) Erfinder: Loibl, Bernd, 79771 Klettgau (DE)
(74) Vertreter: Paul, Dieter-Alfred

(56) Entgegenhaltungen:
- DE-A1- 10 004 486
- DE-U1-202009 000 903
- US-A- 4 234 300

## Beschreibung

Die Erfindung betrifft ein Verfahren zum Heißlaminieren von Blattgut nach dem Oberbegriff des Anspruchs 1, eine für das Verfahren geeignete Laminierfolie nach dem Oberbegriff des Anspruchs 10, einem Laminierfoliensatz nach dem Oberbegriff des Anspruchs 16, ein Laminiergerät nach dem Oberbegriff des Anspruchs 17 und ein Laminiersystem aus Laminiergerät und Laminierfoliensatz gemäß Anspruch 44.

Zum Schutz von Blattgut, insbesondere von wertvollen Dokumenten, ist es bekannt, das Blattgut mit einer Laminierfolie zu verschweißen. Dies geschieht im nicht industriellen Bereich, d.h. im Büro- und Privatbereich, mit Hilfe von in der Regel als Tischgeräte ausgebildeten Laminiergeräten. Solche Laminiergeräte sind beispielsweise aus der DE 20 2005 005 020 U1 und - in Kombination mit einem Schneidgerät - aus der EP 1 724 111 A2 bekannt. Sie haben im Wesentlichen den gleichen Aufbau, d.h. ein Gehäuse, in dem eine Laminiereinrichtung angeordnet ist. Zwischen einer Zuführöffnung auf einer Seite und einer Austrittsöffnung auf der anderen Seite des Gehäuses erstreckt sich durch das Gehäuse ein Durchlaufkanal, dem die Laminiereinrichtung zugeordnet ist. Letztere weist in der Regel mindestens ein Walzenpaar, teilweise auch mehreren Walzenpaare, aus jeweils zwei übereinander angeordneten, einen Laminierspalt ausbildenden Laminierwalzen auf, wobei der Laminierspalt so eingestellt ist, dass die Kombination aus Blattgut und Laminierfolie in dem Laminierspalt einem erheblichen Druck ausgesetzt wird. Bei Heißlaminiergeräten ist zumindest eine der Laminierwalzen, in der Regel beide, beheizt, so dass die Kombination aus Blattgut und Laminierfolie zusätzlich auch erhitzt wird. Beim Durchlauf verkleben die Laminierfolien mit dem einzuschweißenden Blattgut.

In der Regel wird das Blattgut zwischen zwei eine Laminierfolie bildenden Folienblättern eingeschweißt. Dabei kann es sich um lose Folienblätter oder um Folienbahnen handeln, die innerhalb des Laminiergerätes aufgerollt sind und von den Rollen beim Laminiervorgang abgezogen werden, wobei die Vereinzelung über Schneideinrichtungen erfolgt (vgl. US 2004/0050500 A1). Statt dessen können die beiden Folienblätter aber auch in Form einer Laminierfolientasche vorliegen, bei denen die beiden Folienblätter an zumindest einer Seitenkante miteinander verbunden sind. Solche Laminierfolien sind beispielsweise aus der DE 197 44 595 A1 und der DE 201 00 328 U1 bekannt. Die Folienblätter sind als Verbundfolien ausgebildet, bei denen eine durchsichtige, klare Folie aus z.B. Polyethylen oder Polypropylen mit einer wärmeempfindlichen Klebstoffschicht versehen ist, welche beispielsweise aus EVA (Ethylen-Vinylacetat-Copolymer) besteht (vgl. DE 600 29 505 T2).

Zur Zeit sind Laminierfolien in einer Dicke von 30 µm bis 500 µm auf dem Markt. Durch Auswahl der Foliendicke kann dem laminierten Blattgut eine gewünschte Flexibilität bzw. Steifigkeit gegeben werden. Es versteht sich, dass für die Verschweißung dicker Laminierfolien mehr Wärmeenergie aufgewendet werden muss als für die Verschweißung von dünnen Laminierfolien aus gleichem Material. Laminiergeräte, die für die Verarbeitung von Laminierfolien unterschiedlicher Dicke bestimmt sind müssen deshalb derart an die Dicke der jeweils zu verarbeitenden Laminierfolie angepasst werden können, dass einerseits für die Verschweißung des Blattgutes ausreichend Wärmeenergie zur Verfügung gestellt wird, andererseits aber die Laminierfolie nicht überhitzt und damit beschädigt wird. Solche Laminiergeräte weisen deshalb Einstelleinrichtungen auf, mit denen die Temperatur der Laminiereinrichtung und/oder die Durchlaufgeschwindigkeit an die jeweilige Dicke der Laminierfolie von Hand angepasst werden kann.

In der Praxis hat es sich jedoch herausgestellt, dass es immer wieder zu Fehlbedienungen kommt, insbesondere wenn - wie in größeren Büros - eine Vielzahl von Personen Zugang zu einem Laminiergerät hat. Eine Fehlbedienung hat zur Folge, dass bei zu geringerer Hitzeeinwirkung die Laminierung unzureichend ist, das laminierte Blattgut also nicht ausreichend geschützt ist oder dass bei zu hoher Hitzeeinwirkung die Laminierfolie überhitzt und hierdurch die Laminierfolie an den Laminierwalzen anklebt, was die Zerstörung des Laminiergerätes zur Folge hat. Außerdem wird das einlaminierte Blattgut bishin zur Unlesbarkeit beschädigt. Der letztere Zustand ist meist irreparabel und kommt im schlimmsten Fall einer Vernichtung des Dokumentes gleich.

In der DE 100 04 486 A1 ist ein Kartuschenlaminator offenbart, bei dem eine Steuer- und/oder Regeleinrichtung vorgesehen ist, durch welche in Abhängigkeit von mittels eines Sensors detektierten Eigenschaften des jeweiligen Laminarüberzuges den Laminarprozess beeinflussende Stellglieder, wie beispielsweise die Heizeinrichtung zum Einstellen einer bestimmten Laminiertemperatur und/oder eine Antriebseinrichtung zum Einstellen einer bestimmten Laminiergeschwindigkeit und/oder eine Presseinrichtung zum Einstellen eines bestimmten Laminierdrucks ansteuerbar sind. Hierzu weist eine Rollfilm-Kartusche einen maschinenlesbaren Codierstreifen an ihrer Außenfläche auf, beispielsweise einen üblichen Strich-Code-Streifen. Alternativ kann die Codierung auch direkt am Rollfilm angebracht sein und z.B. durch ein Fenster in der Kartuschenwand detektiert werden oder an einem aus dem Ausgabeschlitz ragenden Ende des Rollfilms. Als denkbar angegeben wird auch, dass die Rollfilm-Kartusche oder der Rollfilm mit einer mechanisch detektierbaren Markierung versehen ist, welche durch einen Taster abtastbar und in ein elektrisches Sensorsignal wandelbar ist, das an das Steuergerät übermittelt werden kann.

Der Erfindung liegt die Aufgabe zugrunde, ein Verfahren der gattungsgemäßen Art zum Heißlaminieren von Blattgut bereitzustellen, mit dem Fehlbedienungen des Laminiergerätes bei Verwendung von Laminierfolien unterschiedlicher Dicke - oder auch unterschiedlichen Materials - reduziert oder ganz vermieden werden. Weitere Aufgaben bestehen darin, eine für das Verfahren geeignete Laminierfolie bzw. einen aus einer Mehrzahl solcher Laminierfolien bestehenden Laminierfoliensatz, ein hierfür speziell ausgebildetes Laminiergerät sowie ein System aus Laminiergerät und Laminierfoliensatz zur Verfügung zu stellen.

Die sich auf das Verfahren beziehende Aufgabe wird erfindungsgemäß dadurch gelöst, dass eine Laminierfolie verwendet wird, deren Anfangsrauigkeit auf zumindest einer Seite größer ist als die Endrauigkeit nach dem Laminieren, dass die Laminierfolie auf dieser zumindest einen Seite mit einer Markierung in Form eines Flächenmusters versehen wird, das Flächenbereiche aufweist, deren Rauigkeit von der Anfangsrauigkeit abweicht, wobei die Markierung von einem Sensor des Laminiergerätes auslesbar ist, dass die Laminierfolie mit ihrer Markierung an dem Sensor vorbeigeführt wird, wobei der Sensor die Markierung ausliest und ein für die Markierung charakteristisches Signal erzeugt, und die Temperatur und/oder die Durchlaufgeschwindigkeit in Abhängigkeit von dem Signal eingestellt wird.

Grundgedanke der Erfindung ist es, ein Verfahren bereitzustellen, bei dem die Laminierfolie mit einer deren Dikke und/oder deren Material kennzeichnenden Markierung versehen wird und diese Laminierfolie im Zusammenhang mit einem Laminiergerät verwendet wird, das einen Sensor zum Auslesen der Markierung und zur Erzeugung eines für die Markierung charakteristischen Signals aufweist, wobei die Temperatur und/oder die Durchlaufgeschwindigkeit in Abhängigkeit von der jeweils ausgelesenen Markierung bzw. des vom Sensor erzeugten Signals eingestellt wird. Dabei besteht grundsätzlich die Möglichkeit, das Signal für eine Anzeige zu verwenden, anhand der die Bedienungsperson über eine entsprechende Eingabeschnittstelle die Temperatur und/oder die Durchlaufgeschwindigkeit entsprechend der Anzeige einstellt. Dabei kann die Anzeige einen Code oder die einzustellende Temperatur und/oder Durchlaufgeschwindigkeit darstellen. Hierdurch wird die Gefahr einer Fehlbedienung wesentlich herabgesetzt. Sie wird vollständig ausgeschlossen, wenn das vom Sensor erzeugte Signal an eine Steuereinrichtung zur automatischen Einstellung der Temperatur und/oder der Durchlaufgeschwindigkeit weitergegeben wird. Bei diesem Verfahren erfolgt kein manueller Eingriff mehr. Das Laminierergebnis ist unabhängig davon, welche Dicke und/oder welches Material die Lamininerfolie hat, einwandfrei, und Fehlbedienungen können nicht mehr auftreten.

Bei dem Verfahren nach der Erfindung wird eine Laminierfolie verwendet, deren Anfangsrauigkeit auf zumindest einer Seite größer ist als die Endrauigkeit nach dem Laminieren, wobei die Laminierfolie auf dieser zumindest einen Seite mit einem Flächenmuster als Markierung versehen wird, das Flächenbereiche aufweist, deren Rauigkeit von der Anfangsrauigkeit abweicht, insbesondere geringer ist als die Anfangsrauigkeit, aber nicht geringer als die Endrauigkeit. Ausgangspunkt ist also eine an sich bekannte Laminierfolie, bei der zumindest eine Seite eine Anfangsrauigkeit hat, die in der Regel so groß ist, dass die Laminierfolie matt bzw. opak, also allenfalls durchscheinend ist. Grund für diese Ausbildung ist es, das Haften von Laminierfolien oder von Folienblättern einer Laminierfolie aneinander aufgrund statischer Elektrizität zu reduzieren. In der Regel wird dabei die Anfangsrauigkeit durch den aufgetragenen Klebstoff bewirkt. Für das erfindungsgemäße Verfahren wird diese Ausrüstung der Laminierfolie in der Weise genutzt, dass auf der mit der Anfangsrauigkeit versehenen Seite ein Flächenmuster, vorzugsweise durch Glättung von bestimmten Flächenbereichen, vorgesehen wird, das dann durch den Sensor abgetastet wird. Der Vorzug dieser Art der Markierung besteht darin, dass das Flächenmuster beim Laminiervorgang verschwindet, also am laminierten Endprodukt nicht mehr erkennbar ist, da die Flächen mit der Anfangsrauigkeit - in der Regel die Klebstoffschicht - und gegebenenfalls auch die Flächenbereiche des Flächenmusters so aufgeschmolzen werden, dass die betreffende Seite über ihre gesamte Fläche gleichmäßig glatt und damit auch gleichmäßig durchsichtig wird.

Hinsichtlich Art und Erstreckung des Flächenmusters bestehen eigentlich keine Beschränkungen. Es sollte ein solcher Kontrast zwischen den Flächenbereichen und der Anfangsrauigkeit gegeben sein, dass er von dem Sensor erfassbar ist, vorzugsweise dadurch, dass die Flächenbereiche der Flächenmuster schon so geglättet sind, dass sie die Endrauigkeit nach dem Laminierprozess haben. Sehr einfach herzustellen sind Markierungen, bei denen die Flächenbereiche als gerade, parallel und beabstandet verlaufende Linienbereiche ausgebildet werden. Auf diese Weise kann der Abstand und/oder die Breite und/oder die Anzahl der Linienbereiche abgetastet werden. Die Herstellung der Linienbereiche geschieht auf einfache Weise dadurch, dass die Laminierfolie zunächst flächig auf der dafür vorgesehenen Seite mit der Anfangsrauigkeit versehen wird und anschließend über Walzen geführt wird, die die Linienbereiche durch Glättung der Anfangsrauigkeit herstellen.

Die Linienbereiche können in ihrer Erstreckung auf den Bereich beschränkt werden, der vom Sensor erfasst wird. Aus Herstellungsgründen zweckmäßig ist es jedoch, die Linienbereiche sich über die gesamte Breite bzw. Länge der Laminierfolie erstrecken zu lassen. Für eine gute Auslesung der Linienbereiche ist es zudem vorteilhaft, wenn die Linienbereiche sich quer zur vorgesehenen Durchlaufbewegung durch das Laminiergerät erstrecken. Je nach Orientierung der Ausleserichtung des Sensors können sich die Linienbereiche aber auch schräg zur Durchlaufbewegung oder auch parallel dazu erstrecken.

Die Differenzierung der Laminierfolie mit Blick auf deren Dicke und/oder deren Material kann bei der Ausbildung der Flächenbereiche als Linienbereiche dadurch geschehen, dass der Abstand und/oder die Breite der Linienbereiche um so größer gestaltet wird, je dicker oder je dünner die Laminierfolie ist. Dabei kann die Differenzierung allein über den Abstand oder allein über die Breite der Linienbereiche erfolgen, aber auch durch Differenzierung sowohl durch unterschiedliche Abstände als auch unterschiedliche Breiten der Linienbereiche. So kann der Abstand der Linienbereiche um so größer und die Breite der Linienbereiche um so geringer gestaltet werden, je dicker oder je dünner die Laminierfolie ist.

Grundsätzlich kann das erfindungsgemäße Verfahren auch unter Verwendung von auf Rollen aufgerollten Folienbahnen durchgeführt werden, wobei die Rollen innerhalb des Laminiergerätes angeordnet sind. Sie werden dann im Laminiergerät unter Einschluss des zu verschweißenden Blattgutes zusammengeführt. Die Vereinzelung geschieht dann nach dem Laminiervorgang mittels einer Schneideinrichtung.

In an sich bekannter Weise sollen bei dem erfindungsgemäßen Verfahren aber auch Laminierfolien verwendet werden, die aus einem Paar von Folienblättern bestehen, zwischen denen dann das Blattgut eingelegt wird. Auf diese Weise wird das Blattgut beidseitig durch die Laminierfolie geschützt. Dabei sollten - wie im Stand der Technik ebenfalls bekannt - zumindest ein Folienblatt, besser beide Folienblätter, auf der dem anderen Folienblatt jeweils zugewandten Seite die Anfangsrauigkeit aufweisen, also matt bzw. opak sein. Auf diese Weise können die Folienblätter für das Einlegen des Blattgutes besser voneinander getrennt werden. Vorzugsweise sollten Laminierfolien verwendet werden, deren Folienblätter an zumindest einer Kante miteinander verbunden sind, so dass gesichert ist, dass sie beim Laminierprozess flächendeckend und randbündig übereinander liegen (vgl. insoweit DE 197 44 595 A1 und DE 201 00 328 U1). Dabei reicht es im Regelfall aus, wenn nur eine der beiden Folienblätter mit der Markierung versehen wird.

Zum Auslesen der Markierung kann ein optischer Sensor verwendet werden. Hierzu eignen sich insbesondere Lasersensoren, vor allem Laserscanner, die die Markierung über eine bestimmte Strecke oder einen vorgegebenen Winkel abtasten.

Um ein möglichst großes Spektrum an Laminierfoliendicken verarbeiten zu können, sollte der Laminierspalt, durch den die Kombination aus Laminierfolie und Blattgut zwecks Aufprägen des Druckes geführt wird, einstellbar sein, wobei nach der Erfindung vorgesehen ist, dass dann das vom Laser erzeugte Signal auch dazu benutzt wird, die Höhe des Laminierspaltes einzustellen, sei es, dass die Einstellung in Abhängigkeit von einer Anzeige des Signals von Hand erfolgt oder automatisch über die schon erwähnte Steuereinrichtung.

Die sich auf die Laminierfolie selbst beziehende Aufgabe wird erfindungsgemäß dadurch gelöst, dass die Laminierfolie auf zumindest einer Seite eine Anfangsrauigkeit aufweist, die die Laminierfolien matt bzw. opak macht, und dass die Laminierfolie auf der matten Seite eine Markierung in Form eines Flächenmusters mit Flächenbereichen aufweist, deren Rauigkeit von der Anfangsrauigkeit abweicht, insbesondere geringer ist als die Anfangsrauigkeit. Das Flächenmuster lässt sich von einem Sensor abtasten, das einem Laminiergerät zugeordnet ist, wie es ebenfalls Gegenstand der vorliegenden Erfindung ist. Dabei kann das Flächenmuster differenzierend an die jeweilige Dicke und/oder das jeweilige Material der Laminierfolie angepasst werden, d.h. jeder Dicke bzw. jedem Material kann ein dafür charakteristisches Flächenmuster zugeordnet werden. In Sonderheit kann die Laminierfolie so ausgebildet sein, wie oben schon im Zusammenhang mit dem erfindungsgemäßen Verfahren im Einzelnen beschrieben ist.

Gegenstand der Erfindung ist auch ein Laminierfoliensatz mit Laminierfolien unterschiedlicher Dicke und/oder unterschiedlichen Materials, wobei die Laminierfolien eine für ihre Dicke und/oder ihr Material charakteristische Markierung in Form eines Flächenmusters mit Flächenbereichen auf der matten Seite bzw. zumindest einer der matten Seiten tragen, deren Rauigkeit von der Anfangsrauigkeit abweicht.

Was das Laminiergerät betrifft, wird die sich darauf beziehende Aufgabe erfindungsgemäß dadurch gelöst, dass das Laminiergerät einen Sensor aufweist, der zum Auslesen einer Markierung in Form eines Flächenmusters auf der Laminierfolie geeignet ist, das Flächenbereiche aufweist, deren Rauigkeit von einer Anfangsrauigkeit auf zumindest einer Seite der Laminierfolie abweicht, wobei der Sensor in Abhängigkeit von der ausgelesenen Markierung ein Signal für eine Anzeigeeinrichtung und/oder für eine Steuereinrichtung erzeugt, die mit der Laminiereinrichtung und/oder der Transporteinrichtung verbunden und derart ausgebildet ist, dass die Steuereinrichtung die Temperatur der Laminiereinrichtung und/oder die Durchlaufgeschwindigkeit der Transporteinrichtung in Abhängigkeit von der ausgelesenen Markierung einstellt. Grundgedanke ist auch hier, die Voraussetzung für eine Anpassung der Temperatur und/oder der Durchlaufgeschwindigkeit an die jeweils verwendete Laminierfolie zu schaffen und dabei einen Sensor zu verwenden, der unterschiedliche Markierungen in Form der oben beschriebenen Flächenbereiche eines Flächenmusters nach bestimmten Kriterien auszulesen in der Lage ist, wobei sich die Flächenbereiche hinsichtlich ihrer Rauigkeit gegenüber der Anfangsrauigkeit der Laminierfolie unterscheiden, beispielsweise durch Zählen von Linienbereichen über eine bestimmte Auslesestrecke oder von Abständen etc. In diesem Fall ist das Kriterium die Anzahl und/oder der Abstand der Linienbereiche.

Dabei betrifft die Erfindung zwei Varianten des Laminiergerätes. Bei der einen Variante wird das jeweils erzeugte Signal angezeigt, beispielsweise in Form eines Codes oder als Angabe über die Dicke der Laminierfolie oder als Angabe über die einzustellende Temperatur und/oder Durchlaufgeschwindigkeit, wobei die Bedienungsperson dann die Temperatur und/oder die Durchlaufgeschwindigkeit mit der bei den bekannten Geräten schon vorhandenen Einstelleinrichtung vorgibt. In der zweiten, bevorzugten Variante wird das Signal zur Ansteuerung einer Steuereinrichtung verwendet, über die die Temperatur und/oder die Durchlaufgeschwindigkeit automatisch entsprechend dem Signal bzw. der Markierung auf der Laminierfolie eingestellt wird, so dass insoweit kein manueller Eingriff erforderlich ist. Es versteht sich, dass beide Varianten auch miteinander kombiniert sein können, d.h. dass auch bei der automatischen Variante eine Anzeige der Laminierfoliendicke, der Temperatur und/oder der Durchlaufgeschwindigkeit als reine Information an die Bedienungsperson erfolgt.

In Ausbildung des erfindungsgemäßen Laminiergerätes ist vorgesehen, dass die Laminiereinrichtung zumindest ein Walzenpaar mit zwei einen Laminierspalt ausbildenden Laminierwalzen aufweist, von dem zumindest eine mittels einer Heizeinrichtung beheizbar ist, vorzugsweise beide.

Dabei sollte zumindest eine der Laminierwalzen Teil der Transporteinrichtung sein, wobei dann die Transporteinrichtung einen elektrischen Antrieb aufweist, über den die Laminierwalzen verdrehbar ist bzw. sind und der mit der Steuereinrichtung verbunden ist.

Es ist zweckmäßig, wenn der Sensor zum Auslesen der Markierung in Durchlaufrichtung vor der Laminiereinrichtung angeordnet ist, so dass die Markierung vor Erreichen der Laminiereinrichtung ausgelesen und dann die Laminiereinrichtung hinsichtlich Temperatur und Durchlaufgeschwindigkeit eingestellt wird, bevor die Kombination aus Laminierfolie und Blattgut die Laminiereinrichtung erreicht hat. Eine zweckmäßige Ausführungsform ist gegeben, wenn der Sensor außerhalb des Gehäuses angeordnet ist, vorzugsweise so, dass an dem Gehäuse als Fortsetzung des Durchlaufkanals über die Zuführöffnung hinaus eine Blattauflage vorgesehen ist, wobei dann der Sensor der Blattauflage zugeordnet ist, zweckmäßigerweise in der Blattauflage integriert ist. Dies eröffnet die Möglichkeit, vorhandene Laminiergeräte auf einfache Weise umzurüsten.

Wie schon oben erwähnt, kommt als Sensor vor allem ein optischer Sensor und hier vornehmlich ein Laserscanner in Frage. Der Laser sollte geeignet sein, Flächenbereiche unterschiedlicher Reflektionen und/oder Absorption auszulesen.

Nach einem weiteren Merkmal der Erfindung ist vorgesehen, dass der Sensor quer zur Durchlaufrichtung im Durchlaufkanal beweglich geführt ist. Bei einem Laminiergerät, das in an sich bekannter Weise zwei bewegliche seitenanschläge zur zentrischen Einführung der Laminierfolie in den Durchlaufkanal hat, kann dies beispielsweise dadurch verwirklicht werden, dass der Sensor mit einem der beiden Seitenanschläge verbunden wird, so dass bei Anpassung der Seitenanschläge an das Format der Laminierfolie automatisch eine richtige Zuordnung des Sensors erfolgt.

Damit das Laminiergerät sich auch für einen breiten Bereich von Laminierfoliendicken eignet, sollte die Höhe des von der Laminiereinrichtung erzeugten Laminierspaltes in Abhängigkeit von dem Signal des Sensors einstellbar sein oder über die Steuereinrichtung automatisch eingestellt werden. Auf diese Weise kann der auf die Laminierfolie einwirkende Druck unabhängig von der Dicke der Laminierfolie in einem optimalen Bereich gehalten werden.

Der letzte Teil der Aufgabe wird erfindungsgemäß durch ein Laminiersystem aus einem Laminiergerät und einem Laminierfoliensatz unterschiedlicher Dicke und/oder unterschiedlichen Materials gelöst, wobei das Laminiergerät, wie oben im Einzelnen angegeben, ausgebildet ist und wobei der Laminierfoliensatz Laminierfolien mit zumindest einer für ihre jeweilige Dicke und/oder ihr jeweiliges Material kennzeichnende Markierung in der oben beschriebenen Form hat. Laminiergerät und Laminierfolien sind dabei so aneinander angepasst, dass das Laminiergerät in der Lage ist, mit Hilfe des Sensors die jeweilige Markierung auf den Laminierfolien des Laminierfoliensatzes auszulesen und in Abhängigkeit von der ausgelesenen Markierung eine Anzeige zu erzeugen und/oder automatisch die Temperatur und/oder Durchlaufgeschwindigkeit im Laminiergerät so einzustellen, dass ein optimaler Laminierprozess erhalten wird und das fertige Laminierprodukt eine hohe Qualität besitzt.

In der Zeichnung ist die Erfindung anhand eines Ausführungsbeispiels näher veranschaulicht. Es zeigen:
- Figur 1: eine Schrägansicht der Rückseite des erfin- dungsgemäßen Laminiergerätes;
- Figur 2: das Laminiergerät gemäß Figur 1 im Querschnitt;
- Figur 3: eine Schrägansicht der Vorderseite des Lami- niergerätes gemäß den Figuren 1 und 2 mit drei Laminierfolien unterschiedlicher Dicke und
- Figur 4: eine Schrägansicht der Vorder- und Oberseite des Laminiergerätes gemäß den Figuren 1 bis 3 mit durchlaufender Laminierfolie.

Das in der Zeichnung dargestellte Laminiergerät 1 hat ein Gehäuse 2 mit einem ebenen Gehäuseboden 3, einer Frontwandung 4, einer Rückwandung 5 und einer die Frontwandung 4 und die Rückwandung 5 verbindenden, bogenförmigen Oberwandung 6. Letztere ist mit einer Vielzahl von Kühlschlitzen - beispielhaft mit 7 bezeichnet - versehen.

Von der Rückwandung 5 zur Frontwandung 4 erstreckt sich durch das Gehäuse 2 ein schräg abwärts gerichteter Durchlaufkanal 8 in einer solchen Breite, dass DIN A4-Blattgut querformatig durchgeleitet werden kann. Der Durchlaufkanal 8 wird eingangsseitig durch eine Zuführöffnung 9 in der Rückwandung 5 und eine Austrittsöffnung 10 in der Frontwandung 4 begrenzt.

Etwa in der Mitte des Durchlaufkanals 8 befindet sich eine Laminiereinrichtung 11, von der hier zwei übereinander und mit ihren Drehachsen parallel zueinander angeordnete Laminierwalzen 12, 13 zu sehen sind. Die Laminierwalzen 12, 13 erstrecken sich über die gesamte Breite des Durchlaufkanals 8 und bilden zwischen sich einen Laminierspalt 14 aus. Die Laminierwalzen 12, 13 sind beheizt, so dass sie auf Temperaturen zwischen 80°C und 140°C erhitzt werden können. Sie sind auch Teil einer Transporteinrichtung, zu der ein elektromotorischer, hier nicht näher dargestellter Antrieb gehört, der die beiden Laminierwalzen 12, 13 synchron antreibt, und zwar die obere Laminierwalze 12 im Uhrzeigersinn und die untere Laminierwalze 13 entgegen dem Uhrzeigersinn. Ihre Umfangsgeschwindigkeiten sind identisch.

An der Rückwandung 5 angebracht ist eine Blattauflage 15, deren Oberseite 16 sich bündig an die Unterseite des Durchlaufkanals 8 anschließt und in der gleichen Richtung geneigt ist wie der Durchlaufkanal 8 selbst. Benachbart zur Zuführöffnung 9 ragen über die Oberseite 16 der Blattauflage 15 hinaus zwei Führungsstege 17, 18, die sich gegenüberstehen und die aufgrund mechanischer Kopplung gegensinnig in der Weise bewegbar sind, dass sich bei einer Verstellung die Mitte des Abstands zwischen beiden nicht verlagert. Der Abstand der Führungsstege 17, 18 ist auf diese Weise an das Format der jeweils zu laminierenden Kombination aus Laminierfolie und Blattgut so anpassbar, dass beide Seitenränder dieser Kombination beim Einführen in den Durchlaufkanal 8 durch die Führungsstege 17, 18 geführt werden und die Laminierfolie zentrisch in den Durchlaufkanal 8 einläuft.

Benachbart zu dem Führungssteg 18 ist in der Blattauflage 15 eine rechteckige Ausnehmung 19 vorgesehen, unterhalb der ein Laserscanner 20 an der Unterseite der Blattauflage 15 derart angebracht ist, dass sein Laserfenster nach oben durch die Ausnehmung 19 gerichtet ist. Auf diese Weise kann ein von dem Laserscanner 20 erzeugter Laserstrahl durch die Ausnehmung 19 nach oben strahlen. Der Laserscanner 20 ist mit dem benachbarten Führungssteg 18 verbunden, so dass er sich bei Bewegung des Führungssteges 18 mit bewegt, seine Position also in Bezug auf diesen Führungssteg 18 nicht verändert.

Der Laserscanner 20 ist mit einer im Gehäuse 2 untergebrachten Steuereinrichtung verbunden, die die vom Laserscanner 20 empfangenen Signale mittels einer geeigneten Software in Steuerbefehle für die Drehzahl der Laminierwalzen 12, 13 und/oder deren Heizleistung umsetzt. Hierzu ist die Steuereinrichtung mit einer Drehzahlsteuerung des Antriebes und/oder mit einer Temperatursteuerung der Heizeinrichtung für die Laminierwalzen 12, 13 verbunden.

Die Höhe des Laminierspaltes 14, d.h. der freie Abstand zwischen den beiden Laminierwalzen 12, 13, ist durch senkrechtes Verschieben der oberen Laminierwalze 12 einstellbar. Hierzu ist ein elektromotorischer Antrieb vorhanden, der ebenfalls mit der oben erwähnten Steuereinrichtung dergestalt verbunden ist, dass über sie auch die Spalthöhe des Laminierspaltes 14 in Abhängigkeit von dem vom Laserscanner 20 erzeugten Signal eingestellt wird.

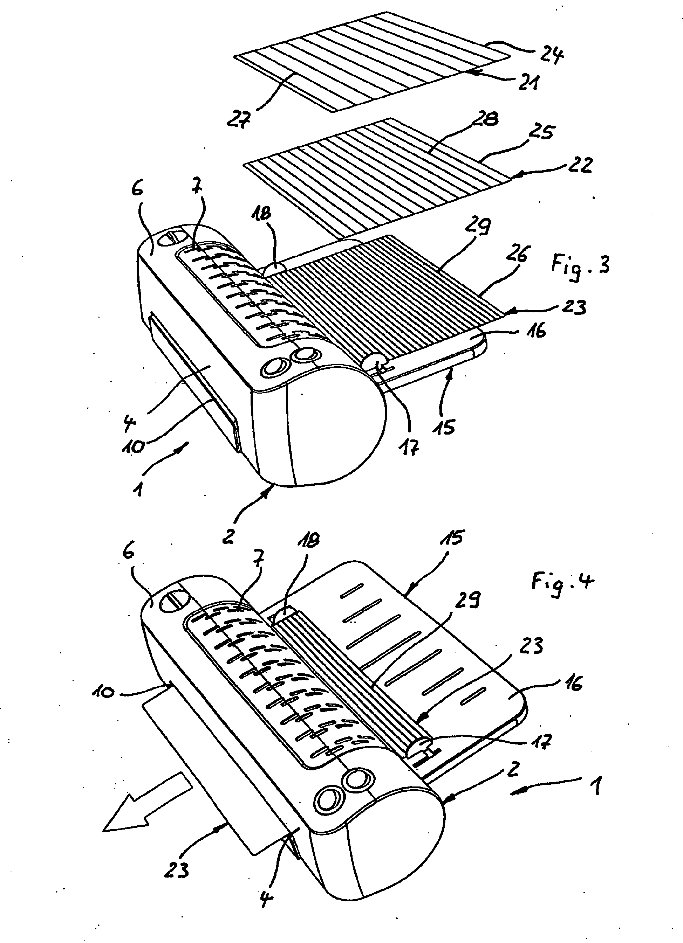

In Figur 3 sind übereinander beabstandet drei Laminierfolien 21, 22, 23 dargestellt, wobei die untere Laminierfolie 23 auf der Blattauflage 15 aufliegt. Die Laminierfolien 21, 22, 23 sind - was hier nicht näher zu sehen ist - als Laminierfolientaschen ausgebildet, d.h. sie bestehen aus zwei gleich großen und deckungsgleich übereinander liegenden Folienblättern, die an einer Kante 24, 25, 26 miteinander verbunden sind. Nach Auseinanderklappen der jeweils beiden Folienblätter kann das einzulaminierende Blattgut zwischen die Folienblätter eingelegt werden.

Die Folienblätter der Laminierfolien 21, 22, 23 bestehen außenseitig aus glatten und damit klaren, d.h. durchsichtig ausgebildeten Kunststofffolien. Um die Folienblätter besser auseinander falten zu können, haben beide auf den einander zugewandten Seiten Klebstoffschichten mit einer solchen Anfangsrauigkeit, dass die Oberflächen matt sind und die Folienblätter selbst und damit auch die Laminierfolien 21, 22, 23 als Ganzes nicht durchsichtig, sondern allenfalls durchscheinend bzw. matt oder opak sind.

Auf der Innenseite des jeweils unteren Folienblattes sind Linienbereiche - beispielhaft mit 27, 28, 29 bezeichnet - einer bestimmten Breite vorgesehen, die dadurch hergestellt worden sind, dass die dort vorhandene Anfangsrauigkeit geglättet worden ist, so dass das Folienblatt in diesen Linienbereichen 27, 28, 29 nicht matt, sondern durchsichtig ist. Die Linienbereiche 27, 28, 29 verlaufen quer zur vorgesehenen Bewegungsrichtung beim Durchlauf durch das Laminiergerät 1. Sie sind parallel zueinander ausgerichtet, erstrecken sich über die gesamte Breite der Laminierfolien 21, 22, 23 und haben die gleiche Breite. Die Linienbereiche 27, 28, 29 können auch - und dann dekkungsgleich - in dem obenseitigen Folienblatt vorgesehen sein.

Der Abstand der Linienbereiche 27, 28, 29 ist signifikant für die Dicke der Laminierfolien 21, 22, 23. Im vorliegenden Beispiel haben die Linienbereiche 27 der oberen Laminierfolie 21 einen großen Abstand, weil die Laminierfolie 21 besonders dick ist, beispielsweise 200 µm, während die Linienbereiche 28 der mittleren Laminierfolien 22 wesentlich geringer beabstandet sind. Dieser Abstand ist signifikant für eine mittlere Dicke der Laminierfolie, beispielsweise 120 µm. Bei der auf der Blattauflage 15 aufliegenden Laminierfolie 23 ist der Abstand der Linienbereiche 29 noch wesentlich kleiner als bei der Laminierfolie 22, wobei der Abstand hier charakteristisch ist für eine Laminierfolie 23 geringer Dicke, beispielsweise 80 µm.

Ein Laminiervorgang läuft wie folgt ab. Nach Einlegen des zu laminierenden Blattgutes zwischen die beiden Folienblätter einer Laminierfolie - hier beispielhaft der Laminierfolie 23 - wird die Kombination aus beidem auf die Blattauflage 15 aufgelegt, wie aus Figur 3 zu ersehen ist. Bei eingeschaltetem Laminiergerät 1 tastet der Laserscanner 20 über einen bestimmten Scanwinkel die Anzahl der dabei erfassten Linienbereiche 29 ab (es kann auch der Abstand zwischen den Linienbereichen 29 erfasst werden). Entsprechend der ausgelesenen Anzahl der Linienbereiche 29 wird - je nach Konstruktion des Laminiergerätes 1 - entweder die Durchlaufgeschwindigkeit durch den Durchlaufkanal 8, d.h. die Drehzahl der Laminierwalzen 12, 13 auf einen hohen Wert und/oder die Temperatur der Laminierwalzen 12, 13 auf einen niedrigen Wert eingestellt. Dies geschieht deswegen, weil die Laminierfolie 23 - wie oben beschrieben - nur eine geringe Dicke hat und demgemäß auch nur eine geringe Wärmekapazität hat, d.h. sie ist mit einer geringen Wärmemenge auf die für den Laminiervorgang optimale Temperatur erhitzt. Gleichzeitig wird der Laminierspalt 14 in Anpassung an die Dikke der Laminierfolie 23 so eng gestellt, dass der für den Laminiervorgang notwendige Druck erreicht wird.

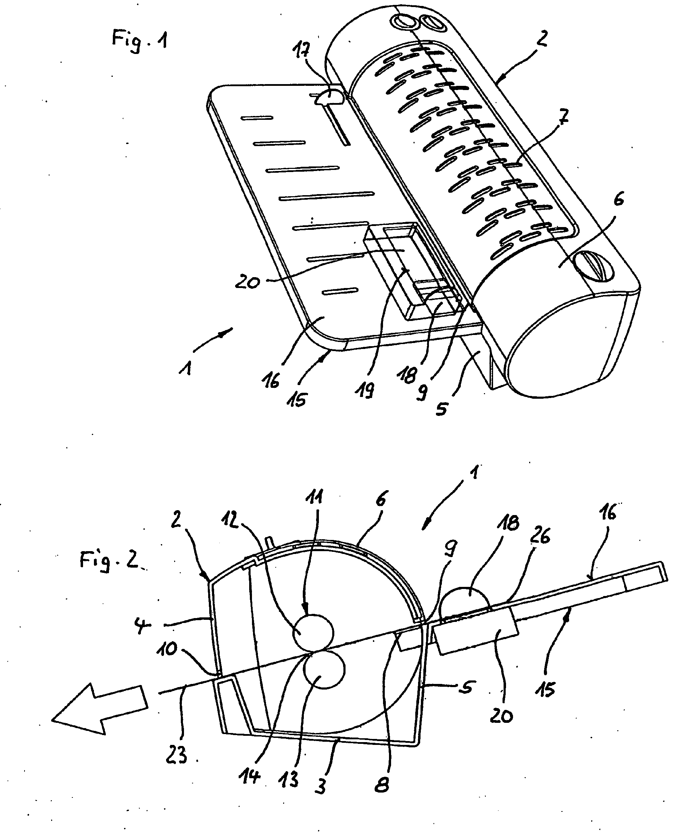

Die Laminierfolie 23 bzw. die Kombination aus Laminierfolie 23 und eingelegtem Blattgut wird dann durch die Zuführöffnung 9 in Richtung auf die Laminierwalzen 12, 13 geschoben. Dort wird sie von den Laminierwalzen 12, 13 erfasst und unter Einwirkung von Druck und Hitze durch den Laminierspalt 14 transportiert (vgl. die Figuren 2 und 4). Nach Verlassen des Laminierspaltes 14 ragt sie aus der Austrittsöffnung 10 heraus und kann dort aus dem Laminiergerät 1 herausgezogen werden.

Beim Laminieren, d.h. beim Durchlauf durch den Laminierspalt 14 werden die Klebstoffschichten an den Innenseiten der Folienblätter der Laminierfolie 23 derart aufgeschmolzen, dass die Laminierfolie 23 insgesamt klar und durchsichtig wird. Dabei passt sich die Rauigkeit der Innenseite desjenigen Folienblattes, auf dem die Linienbereiche 29 ausgebildet sind, an die der Linienbereiche 29 an, so dass der anfängliche Kontrast zwischen den Linienbereichen 29 und den dazwischen liegenden Bereichen verschwindet. Die Markierung der Laminierfolie 23 durch die Linienbereiche 29 ist also nach dem Laminiervorgang nicht mehr sichtbar, d.h. die ursprüngliche Markierung stört beim fertigen Laminierprodukt nicht mehr.

Dies gilt selbstverständlich auch für die Laminierfolien 21, 22. Werden diese zum Laminieren verwendet, liest der Laserscanner 20 eine entsprechend geringere Anzahl von Markierungslinien 28 bzw. 27 mit der Folge, dass die Durchlaufgeschwindigkeit, d.h. die Drehzahl der Laminierwalzen 12, 13 bei zunehmender Dicke der Laminierfolien 21, 22 herabgesetzt und/oder die Temperatur der Laminierwalzen 12, 13 erhöht wird. Gleichzeitig wird der Laminierspalt 14 in entsprechender Weise vergrößert.

## Patentansprüche

1. Verfahren zum Heißlaminieren von Blattgut und Laminierfolie (21, 22, 23) mittels eines als Bürogerät ausgebildeten Laminiergerätes (1), bei dem Blattgut und Laminierfolie (21, 22, 23) zusammengelegt und die hierdurch gebildete Kombination in das Laminiergerät (1) eingeführt wird, wo die Kombination unter Einwirkung von Druck und erhöhter Temperatur und unter Anpassung der Temperatur und/oder der Durchlaufgeschwindigkeit an die Dicke und/oder das Material der Laminierfolie (21, 22, 23) miteinander verschweißt wird, wobei eine Laminierfolie (21, 22, 23) verwendet wird, deren Anfangsrauigkeit auf zumindest einer Seite größer ist als die Endrauigkeit nach dem Laminieren, dass die Laminierfolie (21, 22, 23) auf dieser zumindest einen Seite mit einer Markierung in Form eines Flächenmusters versehen wird, das Flächenbereiche (27, 28, 29) aufweist, deren Rauigkeit von der Anfangsrauigkeit abweicht, wobei die Markierung von einem Sensor (20) des Laminiergerätes (1) auslesbar ist, dass die Laminierfolie (21, 22, 23) mit ihrer Markierung an dem Sensor (20) vorbeigeführt wird, wobei der Sensor (20) die Markierung ausliest und ein für die Markierung charakteristisches Signal erzeugt, und dass die Temperatur und/oder die Durchlaufgeschwindigkeit in Abhängigkeit von dem Signal eingestellt wird.

2. Verfahren nach Anspruch 1, **dadurch gekennzeichnet, dass** die Rauigkeit der Flächenbereiche (27, 28, 29) geringer als die Anfangsrauigkeit, aber nicht geringer als die Endrauigkeit ist, insbesondere dass die Flächenbereiche als gerade sowie parallel und beabstandet verlaufende Linienbereiche (27, 28, 29) ausgebildet werden, insbesondere dass die Linienbereiche (27, 28, 29) so ausgebildet werden, dass sie sich quer zur Durchlaufbewegung durch das Laminiergerät (1) erstrecken, wobei vorzugsweise der Abstand und/oder die Breite der Linienbereiche (27, 28, 29) um so größer gestaltet wird, je dicker oder je dünner die Laminierfolie (21, 22, 23) ist.

3. Verfahren nach Anspruch 2, **dadurch gekennzeichnet, dass** der Abstand der Linienbereiche (27, 28, 29) um so größer und die Breite der Linienbereiche (27, 28, 29) um so geringer gestaltet wird, je dicker oder je dünner die Laminierfolie (21, 22, 23) ist.

4. Verfahren nach einem der Ansprüche 1 bis 3, **dadurch gekennzeichnet, dass** eine Laminierfolie (27, 28, 29) verwendet wird, die aus einem Paar von Folienblättern besteht, zwischen denen das Blattgut eingelegt wird.

5. Verfahren nach zumindest den Ansprüchen 2 und 4, **dadurch gekennzeichnet, dass** zumindest ein Folienblatt auf der dem anderen Folienblatt zugewandten Seite die Anfangsrauigkeit aufweist.

6. Verfahren nach Anspruch 4 oder 5, **dadurch gekennzeichnet, dass** eine Laminierfolie (21, 22, 23) verwendet wird, deren Folienblätter an zumindest einer Kante (24, 25, 26) miteinander verbunden sind.

7. Verfahren nach einem der Ansprüche 4 bis 6, **dadurch gekennzeichnet, dass** nur eine der beiden Folienblätter mit der Markierung versehen wird.

8. Verfahren nach einem der Ansprüche 1 bis 7, **dadurch gekennzeichnet, dass** die Markierung mit einem optischen Sensor, insbesondere einem Lasersensor, ausgelesen wird.

9. Verfahren nach einem der Ansprüche 1 bis 8, **dadurch gekennzeichnet, dass** über das Signal auch die Höhe eines Laminierspaltes (14) im Laminiergerät (1) eingestellt wird.

10. Laminierfolie (21, 22, 23) für die Durchführung des Verfahrens nach einem der Ansprüche 1 bis 9, wobei die Laminierfolie (21, 22, 23) auf zumindest einer Seite eine Anfangsrauigkeit aufweist, die die Laminierfolie (21,22, 23) matt macht, **dadurch gekennzeichnet, dass** die Laminierfolie (21, 22, 23) auf der matten Seite bzw. zumindest einer der matten Seiten eine Markierung in Form eines Flächenmusters mit Flächenbereichen (27, 28, 29) aufweist, deren Rauigkeit von der Anfangsrauigkeit abweicht, insbesondere die Rauigkeit geringer ist als die Anfangsrauigkeit.

11. Laminierfolie nach Anspruch 10, **dadurch gekennzeichnet, dass** die Flächenbereiche als gerade sowie parallel und beabstandet verlaufende Linienbereiche (27, 28, 29) ausgebildet sind, insbesondere dass sich die Linienbereiche (27, 28, 29) parallel zu einer Kante der Laminierfolie erstrecken, wobei der Abstand und/oder die Breite der Linienbereiche (27, 28, 29) vorzugsweise um so größer ist, je dicker oder je dünner die Laminierfolie ist.

12. Laminierfolie nach Anspruch 11, **dadurch gekennzeichnet, dass** der Abstand der Linienbereiche (27, 28, 29) um so größer und die Breite der Linienbereiche (27, 28, 29) um so geringer ist, je dicker oder je dünner die Laminierfolie (21, 22, 23) ist.

13. Laminierfolie nach einem der Ansprüche 10 bis 12, **dadurch gekennzeichnet, dass** die Laminierfolie (21, 22, 23) aus einem Paar von Folienblättern besteht, wobei insbesondere ein Folienblatt auf der dem anderen Formblatt zugewandten Seite die Anfangsrauigkeit aufweist und dort das Flächenmuster vorgesehen ist.

14. Laminierfolie nach Anspruch 13, **dadurch gekennzeichnet, dass** die Folienblätter an zumindest einer Kante (24, 25, 26) miteinander verbunden sind.

15. Laminierfolie nach Anspruch 13 oder 14, **dadurch gekennzeichnet, dass** nur eine der beiden Folienblätter mit dem Flächenmuster versehen ist.

16. Laminierfoliensatz mit Laminierfolien (21, 22, 23) unterschiedlicher Dicke und/oder unterschiedlichen Materials, **dadurch gekennzeichnet, dass** die Laminierfolien (21, 22, 23) eine für ihre Dicke und/oder ihr Material charakteristische Markierung nach einem der Ansprüche 10 bis 15 tragen.

17. Laminiergerät (1) zum Heißlaminieren von Blattgut und Laminierfolie, mit einem Gehäuse (2), durch das - ausgehend von einer Zuführöffnung (9) - ein Durchlaufkanal (8) für den Durchlauf einer Kombination aus Blattgut und Laminierfolie (21, 22, 23) geht und in dem ein dem Durchlaufkanal (8) zugeordnete Laminiereinrichtung (11) angeordnet ist, in der die Kombination unter Einwirkung von Druck und erhöhter Temperatur laminierbar ist, wobei in dem Gehäuse (2) eine Transporteinrichtung (12, 13) zum Transport der Kombination in dem Durchlaufkanal (8) mit einer bestimmten Durchlaufgeschwindigkeit vorgesehen ist und wobei die Temperatur und/oder die Durchlaufgeschwindigkeit einstellbar ist bzw. sind, wobei das Laminiergerät (1) einen Sensor (20) aufweist, der zum Auslesen einer Markierung in Form eines Flächenmusters auf der Laminierfolie (21, 22, 23) geeignet ist, das Flächenbereiche (27, 28, 29) aufweist, deren Rauigkeit von einer Anfangsrauigkeit auf zumindest einer Seite der Laminierfolie (21, 22, 23) abweicht, wobei der Sensor (20) in Abhängigkeit von der ausgelesenen Markierung ein Signal für eine Anzeigeeinrichtung und/oder für eine Steuereinrichtung erzeugt, die mit der Laminiereinrichtung (11) und/oder der Transporteinrichtung (12, 13) verbunden und derart ausgebildet ist, dass die Steuereinrichtung die Temperatur der Laminiereinrichtung (11) und/oder die Durchlaufgeschwindigkeit der Transporteinrichtung (12, 13) in Abhängigkeit von der ausgelesenen Markierung einstellt.

18. Laminiergerät nach Anspruch 17, **dadurch gekennzeichnet, dass** die Laminiereinrichtung (11) zumindest ein Walzenpaar mit zwei einen Laminierspalt (14) ausbildenden Laminierwalzen (12, 13) aufweist, von denen zumindest eine mittels einer Heizeinrichtung beheizbar ist, insbesondere wobei zumindest eine der Laminierwalzen (12, 13) Teil der Transporteinrichtung ist, und dass die Transporteinrichtung einen elektrischen Antrieb aufweist, über den die Laminierwalze(n) (12, 13) verdrehbar ist bzw. sind.

19. Laminiergerät nach Anspruch 17 oder 18, **dadurch gekennzeichnet, dass** der Sensor (20) in Durchlaufrichtung vor der Laminiereinrichtung (11), insbesondere außerhalb des Gehäuse (2) angeordnet ist, wobei insbesondere an dem Gehäuse (2) als Fortsetzung des Durchlaufkanals (8) über die Zuführöffnung (9) hinaus eine Blattauflage vorgesehen ist und dass der Sensor der Blattauflage (15) zugeordnet ist, insbesondere in der Blattauflage (15) integriert ist.

20. Laminiergerät nach einem der Ansprüche 17 bis 19, **dadurch gekennzeichnet, dass** der Sensor (20) als optischer Sensor, insbesondere als Laserscanner ausgebildet ist.

21. Laminiergerät nach einem der Ansprüche 17 bis 20, **dadurch gekennzeichnet, dass** der Sensor (20) geeignet ist, Flächenbereiche unterschiedlicher Reflektionen und/oder Absorption auszulesen.

22. Laminiergerät nach einem der Ansprüche 17 bis 21, **dadurch gekennzeichnet, dass** der Sensor (20) quer zur Durchlaufrichtung im Durchlaufkanal (8) beweglich geführt ist, insbesondere dass das Laminiergerät (1) zwei bewegliche Seitenanschläge (17, 18) zur zentrischen Einführung der Laminierfolien (21, 22, 23) aufweist, wobei der Sensor (20) mit einer der Seitenanschläge (17, 18) verbunden ist.

23. Laminiergerät nach einem der Ansprüche 17 bis 22, **dadurch gekennzeichnet, dass** die Laminiereinrichtung (11) im Durchlaufkanal (9) einen Laminierspalt (14) aufweist, in dem die Kombination mit Druck und Temperatur beaufschlagt wird, und dass die Höhe des Laminierspaltes (14) in Abhängigkeit von dem Signal des Sensors (20) einstellbar ist oder über die Steuereinrichtung automatisch eingestellt wird.

24. Laminiersystem aus einem Laminiergerät (1) nach einem der Ansprüche 17 bis 23 und einem Laminierfoliensatz nach Anspruch 16.

## Claims

1. A method for hot laminating sheet material and laminating foil (21, 22, 23) through at least one laminating apparatus (1) configured as a piece of office equipment, in which sheet material and laminating foil (21, 22, 23) are joined, and the combination formed thereby is inserted into the laminating unit (1), wherein the combination under the influence of pressure and increased temperature and through adaptation of temperature and/or pass-through velocity to the thickness and/or the material of the laminating foil (21, 22, 23) is hot sealed together, wherein a laminating foil (21, 22, 23) is used, whose initial roughness at least on one side is greater than the end roughness after laminating, that the laminating foil (21, 22, 23) is provided on this at least one side with a marking in the form of a surface pattern, which comprises surface portions (27, 28, 29), whose roughness differs from the initial roughness, that the marking can be read out by a sensor (20) of the laminating unit (1), that the laminating foil (21, 22, 23) with its marking is run past the sensor (20) , wherein the sensor (20) reads out the marking and generates a signal which is characteristic for the marking, and that the temperature and/or the pass-through velocity is adjusted as a function of the signal.

2. A method according to claim 1, **characterized in that** the roughness of the surface portions (27, 28, 29) is less than the initial roughness, but not less than the end roughness, in particular, wherein the surface portions are configured as straight and parallel line portions (27, 28, 29) extending at an offset, in particular, wherein the line portions (27, 28, 29) are configured, so that they extend transversally to the pass-through movement through the laminating unit (1), wherein preferably the distance and/or the width of the line portions (27, 28, 29) is configured the greater, the thicker or the thinner the laminating foil (21, 22, 23) is.

3. A method according to claim 2, **characterized in that** the distance of the line portions (27, 28, 29) is configured the greater, and the width of the line portions (27, 28, 29) is configured the smaller, the thicker or the thinner the laminating foil (21, 22, 23) is.

4. A method according to one of the claims 1 through 3, **characterized in that** a laminating foil (21, 22, 23) is used, which is made of a pair of foil sheets, between which the sheet material is inserted.

5. A method according to at least one of the claims 2 and 4, **characterized in that** at least one foil sheet has the initial roughness on the side oriented towards the other foil sheet.

6. A method according to claim 4 or 5, **characterized in that** a laminating foil (21, 22, 23) is used, whose foil sheets are connected to one another at least at one edge (24, 25, 26).

7. A method according to one of the claims 4 through 6, **characterized in that** only one of the two foil sheets is provided with the marking.

8. A method according to one of the claims 1 through 7, **characterized in that** the marking is read out through an optical sensor, in particular a laser sensor.

9. A method according to one of the claims 1 through 8, **characterized in that** also the height of a laminating gap (14) in the laminating unit (1) is adjusted through the signal.

10. A laminating foil (21, 22, 23) for performing the method according to one of the claims 1 through 9, wherein the laminating foil (21, 22, 23) has an initial roughness at least on one side, which makes the laminating foil (21, 22, 23) matte, **characterized in that** the laminating foil (21, 22, 23) has a marking configured as a surface pattern with surface portions (27, 28, 29) on the matte side or at least on the one of the matte sides, wherein the roughness of the surface portions is different from the initial roughness, in particular wherein the roughness is less than the initial roughness.

11. A laminating foil according to claim 10, **characterized in that** the surface portions are configured as straight and parallel and offset extending line portions (27, 28, 29), in particular, that the line portions (27, 28, 29) extend in parallel to an edge of the laminating foil, wherein the distance and/or the width of the line portions (27, 28, 29) is preferably the greater, the thicker or the thinner the laminating foil is.

12. A laminating foil according to claim 11, wherein the distance of the line portions (27, 28, 29) is the greater at the width of the line portions (27, 28, 29) is the smaller, the thicker or the thinner the laminating foil (21, 22, 23) is.

13. A laminating foil according to one of the claims 10 through 12, wherein the laminating foil (21, 22, 23) is made of a pair of foil sheets, wherein in particular one foil sheet on the side facing the other foil sheet has the initial roughness and the surface pattern is provided there.

14. A laminating foil according to claim 13, wherein the foil sheets are connected with one another at least at one edge (24, 25, 26).

15. A laminating foil according to claim 13 or 14, wherein only one of the two foil sheets is provided with the surface pattern.

16. A laminating foil set with laminating foils (21, 22, 23) with different thicknesses and/or different materials, wherein the laminating foils (21, 22, 23) have respective markings according to one of the claims 10 through 15 which are characteristic for their thicknesses and/or their materials.

17. A laminating unit (1) for hot laminating sheet material and laminating foil comprising a housing (2), through which starting at a feed opening (9), a pass-through channel (8) extends for passing through a combination of sheet material and laminating foil (21, 22, 23), and in which a laminating device (11) is disposed, which is associated with the pass-through channel (8) and in which the combination can be laminated under the impact of pressure and increased temperature, wherein a transport device (12, 13) is disposed in the housing (2) for transporting the combination in the pass-through channel (8) with a particular pass-through velocity, and wherein the temperature and/or the pass-through velocity is adjustable, wherein the laminating unit (1) comprises a sensor (20), which is configured for reading out a marking configured as a surface pattern on the laminating foil (21, 22, 23), which surface pattern comprises surface portions (27, 28, 29), whose roughness differs from an initial roughness at least on one side of the laminating foil (21, 22, 23), wherein the sensor (20) generates a signal for a display device and/or for a control device as a function of the readout marking, which control device is connected to the laminating device (11) and/or the transport device (12, 13), and configured so that the control device adjusts the temperature of the laminating apparatus (11) and/or the pass-through velocity of the transport device (12, 13) as a function of the read out marking.

18. A laminating unit according to claim 17, **characterized in that** the laminating device (11) comprises at least one roller pair with two laminating rollers (12, 13) forming a laminating gap (14) with at least one of the rollers being heatable through a heater, in particular, wherein at least one of the laminating rollers (12, 13) is part of the transport device, and the transport device has an electrical drive through which the laminating roller(s) (12, 13) is or are rotatable.

19. A laminating unit according to claim 17 or 18, **characterized in that** the sensor (20) is disposed in pass-through direction in front of the laminating device (11), in particular outside of the housing (2), wherein in particular, at the housing (2) as an extension of the pass-through channel (8), a sheet support is provided beyond the feed opening (9) and wherein the sensor is associated with the sheet support (15), in particular integrated into the sheet support (15).

20. A laminating unit according to one of the claims 17 through 19, **characterized in that** the sensor (20) is configured as an optical sensor, in particular as a laser scanner.

21. A laminating unit according to one of the claims 17 through 20, **characterized in that** the sensor (20) is configured to read out surface portions with different reflectivity and/or absorption.

22. A laminating unit according to one of the claims 17 through 21, **characterized in that** the sensor (20) is movably supported transversal through the pass-through direction in the pass-through channel (8), in particular, wherein the laminating unit (1) has two movable side stops (17, 18) for centric insertion of the laminating foils (21, 22, 23), wherein the sensor (20) is connected with one of the side stops (17, 18).

23. A laminating unit according to one of the claims 17 through 22, **characterized in that** the laminating apparatus (11) comprises a laminating gap (14) in the pass-through channel (9), in which laminating gap the combination is loaded with pressure and temperature, and the height of the laminating gap (14) is adjustable as a function of the signal of the sensor (20), or automatically adjusted through the control apparatus.

24. A laminating system comprising a laminating unit (1) according to one of the claims 17 through 23 and a laminating foil set according to claim 16.

## Revendications

1. Procédé de laminage à chaud de produit en feuille et film de laminage (21, 22, 23) au moyen d'un appareil de laminage (1) conçu en tant qu'appareil de bureau, dans le cas duquel le produit en feuille et le film de laminage (21, 22, 23) sont assemblés et la combinaison ainsi formée est introduite dans l'appareil de laminage (1), où la combinaison est jointe par soudage sous l'effet de la pression et d'une température élevée et avec adaptation de la température et/ou de la vitesse de passage à l'épaisseur et /ou au matériel du film de laminage (21, 22, 23), sachant qu'un film de laminage (21, 22, 23) est utilisé, dont la rugosité initiale sur au moins l'un des côtés est supérieur à la rugosité finale après le laminage, que le film de laminage (21, 22, 23) sur ce côté minimum est pourvu d'un marquage en forme d'un motif de surface, qui présente des zones de surface (27, 28, 29), dont la rugosité diffère de la rugosité initiale, sachant que le marquage peut être lu par un capteur (20) de l'appareil de laminage (1), que le film de laminage (21, 22, 23) est passé avec son marquage devant le capteur (20), sachant que le capteur (20) lit le marquage et émet un signal caractéristique pour le marquage, et que la température et/ou la vitesse de passage est réglée en fonction du signal.

2. Procédé selon revendication 1, **caractérisé en ce que** la rugosité des zones de surface (27, 28, 29) est inférieure à la rugosité initiale, mais non inférieure à la rugosité finale, notamment que les zones de surface sont formées en tant que zones de lignes (27, 28, 29) droites, parallèles et distantes, notamment que les zones de lignes (27, 28, 29) sont formées de telle manière qu'elles s'étendent transversalement par rapport au mouvement de passage à travers l'appareil de laminage (1), sachant que de préférence la distance et /ou la largeur des zones de lignes (27, 28, 29) est d'autant plus grande que le film de laminage (21, 22, 23) est épais ou fin.

3. Procédé selon revendication 2, **caractérisé en ce que** la distance des zones de lignes (27, 28, 29) est d'autant plus grande et la largeur des zones de lignes (27, 28, 29) est d'autant plus faible que le film de laminage (21, 22, 23) est épais ou fin.

4. Procédé selon l'une des revendications 1 à 3, **caractérisée en ce qu'**un film de laminage (27, 28, 29) est utilisé, qui est composé d'une paire de feuilles de film, entre lesquelles le produit en feuille est inséré.

5. Procédé selon au moins les revendications 2 et 4, **caractérisé en ce qu'**au moins une feuille de film présente la rugosité initiale sur le côté tourné vers l'autre feuille de film.

6. Procédé selon revendication 4 ou 5, **caractérisé en ce qu'**un film de laminage (21, 22, 23) est utilisé, dont les feuilles de film sont reliées entre elles sur au moins un bord (24, 25, 26).

7. Procédé selon l'une des revendications 4 à 6, **caractérisé en ce qu'**une des deux feuilles de film seulement est pourvue du marquage.

8. Procédé selon l'une des revendications 1 à 7, **caractérisée en ce que** le marquage est lu à l'aide d'un capteur optique, notamment un capteur laser.

9. Procédé selon l'une des revendications 1 à 8, **caractérisé en ce qu'**également la hauteur d'une fente de laminage (14) dans l'appareil de laminage (1) est réglée par le signal.

10. Film de laminage (21, 22, 23) pour l'exécution du procédé selon l'une des revendications 1 à 9, sachant que le film de laminage (21, 22, 23) présente une rugosité initiale sur au moins un côté, qui ternit le film de laminage (21, 22, 23), **caractérisée en ce que** le film de laminage (21, 22, 23) présente sur le côté mat ou au moins sur l'un des côtés mats un marquage en forme de motif de surface avec zones de surface (27, 28, 29), dont la rugosité diffère de la rugosité initiale, notamment la rugosité est inférieure à la rugosité initiale.

11. Film de laminage selon revendication 10, **caractérisé en ce que** les zones de surfaces sont formées en tant que zones de lignes (27, 28, 29) droites, parallèles et distantes, notamment que les zones de lignes (27, 28, 29) s'étendent parallèlement à un bord du film de laminage, sachant que la distance et/ou la largeur des zones de lignes (27, 28, 29) est de préférence d'autant plus grande que le film de laminage est épais ou fin.

12. Film de laminage selon revendication 11, **caractérisé en ce que** la distance des zones de lignes (27, 28, 29) est d'autant plus grande et la largeur des zones de lignes (27, 28, 29) est d'autant plus faible que le film de laminage (21, 22, 23) est épais ou fin.

13. Film de laminage selon l'une des revendications 10 à 12, **caractérisé en ce que** le film de laminage (21, 22, 23) est composé d'une paire de feuilles de film, sachant notamment qu'une feuille de film présente la rugosité initiale sur le côté tourné vers l'autre feuille de film, et le motif de surface est prévu à cet endroit.

14. Feuille à laminer selon revendication 13, **caractérisé en ce que** les feuilles de film sont reliées entre elles sur au moins un bord (24, 25, 26).

15. Film de laminage selon revendication 13 ou 14, **caractérisé en ce qu'**une seule des deux feuilles de film est pourvue d'un motif de surface.

16. Ensemble de films de laminage avec feuilles de laminage (21, 22, 23) d'une épaisseur différente et/ou de matériaux différents, **caractérisé en ce que** les films de laminage (21, 22, 23) portent un marquage caractéristique pour leur épaisseur et/ou leur matériau, selon l'une des revendications 10 à 15.

17. Appareil de laminage (1) pour le laminage à chaud de produit en feuille et film de laminage, avec un boîtier (2) à travers lequel - partant d'une ouverture d'amenée (9) - un canal de passage (8) passe pour le passage d'une combinaison de produit en feuille et film de laminage (21, 22, 23) et dans lequel est placé un dispositif de laminage (11) correspondant au canal de passage (8), dans lequel la combinaison peut être laminée sous l'effet de la pression et d'une température élevée, sachant que dans le boîtier (2) un dispositif de transport destiné à transporter la combinaison dans le canal de passage (8) est prévu avec une vitesse de passage déterminée et sachant que la température et/ou la vitesse de passage est ou sont réglable (s), sachant que l'appareil de laminage (1) présente un capteur (20) approprié pour la lecture d'un marquage en forme de motif de surface sur le film de laminage (21, 22, 23) qui présente de zones de surfaces (27, 28, 29) dont la rugosité diffère d'une rugosité initiale sur au moins un côté du film de laminage (21, 22, 23), sachant que le capteur (20) émet, en fonction du marquage lu, un signal pour un dispositif d'affichage et/ou pour un dispositif de commande, qui est relié avec le dispositif de laminage (11) et/ou le dispositif de transport (12, 13) et est conçu de telle manière que le dispositif de commande règle la température du dispositif de laminage (11) et/ou la vitesse de passage du dispositif de transport (12, 13) en fonction du marquage lu.

18. Appareil de laminage selon revendication 17, **caractérisé en ce que** le dispositif de laminage (11) présente au moins une paire de rouleaux avec deux rouleaux de laminage (12, 13) formant une fente de laminage (14), desquels au moins un peut être chauffé par un dispositif de chauffage, notamment sachant qu'au moins un des rouleaux de laminage (12, 13) est une partie du dispositif de transport et que le dispositif de transport présente un entraînement électrique par lequel le/les rouleau/x de laminage (12, 13) peut ou peuvent subir une torsion.

19. Appareil de laminage selon revendication 17 ou 18, **caractérisée en ce que** le capteur (20) est placé dans le sens de passage devant le dispositif de laminage (11), notamment à l'extérieur du boîtier (2), sachant notamment que sur le boîtier (2) un support de feuille est prévu en tant que continuation du canal de passage (8) au-delà de l'ouverture d'amenée (9) et que le capteur est affecté au support de feuille (15), notamment intégré dans le support de feuille (15).

20. Appareil de laminage selon l'une des revendications 17 à 19, **caractérisé en ce que** le capteur (20) est conçu en tant que capteur optique, notamment en tant que scanner laser.

21. Appareil de laminage selon l'une des revendications 17 à 20, **caractérisé en ce que** le capteur (20) est approprié pour lire les zones de surfaces présentant différents reflets et / ou absorption.

22. Appareil de laminage selon l'une des revendications 17 à 21, **caractérisé en ce que** le capteur (20) est guidé de manière mobile transversalement par rapport au sens de passage dans le canal de passage (8), notamment que l'appareil de laminage (1) présente deux butées latérales mobiles (17, 18) pour l'insertion centrée des films de laminage (21, 22, 23) sachant que le capteur (20) est relié à l'une des butées latérales (17, 18).

23. Appareil de laminage selon l'une des revendications 17 à 22, **caractérisé en ce que** le dispositif de laminage (11) présente dans le canal de passage (9) une fente de laminage (11), dans laquelle la combinaison est pressurisée et chauffée, et que la hauteur de la fente de laminage (14) peut être réglée en fonction du signal du capteur (20) ou est réglée automatiquement par le dispositif de commande.

24. Système de laminage constitué d'un appareil de laminage (1) selon l'une des revendications 17 à 23, et d'un ensemble de films de laminage selon revendication 16.
